# EUROPEAN PATENT APPLICATION

(11) **EP 4 588 740 A1**
(43) Date of publication of application: **23.07.2025**
(21) Application number: 24222792.4
(22) Date of filing: 23.12.2024
(51) Int. Cl.: B60W 10/06, B60W 10/184, B60W 30/18, B60K 6/48, B60K 6/547, B60W 10/08, B60W 30/184, B60W 30/186

(54) **VEHICLE START CONTROL DEVICE**

(30) Priority: 17.01.2024 JP 2024005439
(71) Applicant: Suzuki Motor Corporation, Shizuoka 432-8611 (JP)
(72) Inventor: OTA, Yasuo, HAMAMATSU-SHI, 432-8611 (JP)
(74) Representative: Plasseraud IP

(57) **Abstract**

Object

It is to provide a vehicle start control device capable of suppressing wear and tear on a power train due to a release of a braking force holding control.

Resolution Means

An HCU is configured to execute a driving force limitation control of limiting a driving force from a drive power source based on a road surface gradient, at a release of a braking force holding control in response to an accelerator operation (step S7). The HCU executes the driving force limitation control, on a condition that a vehicle speed is below a predetermined vehicle speed threshold (YES in step S4). The HCU executes the driving force limitation control, on another condition that an accelerator opening which corresponds to the accelerator operation is below a predetermined accelerator opening threshold (YES in step S5).

## Description

### Technical Field

The present invention relates to a vehicle start control device.

### Background Art

As a prior art, there is known in Patent Document 1 a vehicle in which a brake hold control of holding a braking force so as to keep the vehicle stopped is executed even without a brake operation by a driver. A control device in the vehicle described in Patent Document 1 executes, when a degree of brake pedal operation (e.g., an amount of operation to a brake pedal) exceeds a predetermined degree while the vehicle is stopped, a control (brake hold control) of holding the braking force even without the brake pedal operation. This vehicle control device releases the brake hold control and starts the vehicle, when the driver operates an accelerator pedal.

### Citation List

### Patent Literature

Patent Document 1: JP 2009-112162 A

### Summary of Invention

### Technical Problem

However, in such a technique described in Patent Document 1, there may occur wear and tear on a power train due to a release of the brake hold control. That is, in a process of releasing the brake hold control in response to an operation to the accelerator pedal, the driving force increases due to the operation to the accelerator pedal, but the vehicle remains stopped until this driving force exceeds the remaining braking force.

Thus, in the process of releasing the brake hold control, both the driving force and the braking force simultaneously act on the vehicle, thereby causing the wear and tear on the power train of the vehicle.

For example, in a vehicle mounted with a transmission, such as an automated manual transmission (AMT), in such a process of releasing the brake hold control, a half-clutch state is maintained, thereby causing a possibility that a clutch may overheat and wear.

In addition, in a hybrid vehicle with a traction motor as a drive power source, which is directly coupled to a shaft, there is a possibility that, a large current may flow through high-voltage components in order to output a motor torque with the motor being stopped by the braking force, thereby damaging the high-voltage components.

Thus, an object of the present invention is to provide a vehicle start control device capable of suppressing wear and tear on a power train due to a release of a braking force holding control.

### Solution to Problem

According to an aspect of the present invention, there is provided a vehicle start control device mountable on a vehicle with a drive power source to generate a driving force to drive the vehicle, the vehicle start control device including a control unit to: execute a braking force holding control of holding a braking force so as to keep the vehicle stopped even without a driver's brake operation; and release the braking force holding control to thereby start the vehicle, upon a driver's accelerator operation during the braking force holding control, wherein the control unit is configured to execute a driving force limitation control of limiting, based on a road surface gradient, the driving force to be generated from the drive power source, at the release of the braking force holding control.

### Advantageous Effects of Invention

Accordingly, it is possible to suppress wear and tear on a power train due to a release of a braking force holding control.

### Brief Description of Drawings

FIG. 1 is a diagram illustrating a configuration of a vehicle mounted with a vehicle start control device according to an embodiment of the present invention.
FIG. 2 is a diagram illustrating an HCU of the vehicle start control device according to the embodiment of the present invention, various sensors, and a control target.
FIG. 3 is a diagram illustrating a calculation process for a limited driver-demanded torque value, to be performed in the vehicle start control device according to the embodiment of the present invention.
FIG. 4 is a flowchart illustrating a torque suppression process to be performed in the vehicle start control device according to the embodiment of the present invention.

### Description of Embodiments

A vehicle start control device according to an embodiment of the present invention is mounted on a vehicle with a drive power source to generate a driving force to drive the vehicle, the vehicle start control device including a control unit to: execute a braking force holding control of holding a braking force so as to keep the vehicle stopped even without a driver's brake operation; and release the braking force holding control to thereby start the vehicle, upon a driver's accelerator operation during the braking force holding control, wherein the control unit is configured to execute a driving force limitation control of limiting, based on a road surface gradient, the driving force to be generated from the drive power source, at the release of the braking force holding control.

Accordingly, it is possible to suppress wear and tear on a power train due to a release of a braking force holding control.

### Embodiments

Hereinafter, a vehicle mounted with a vehicle start control device according to an embodiment of the present invention will be described with reference to the drawings.

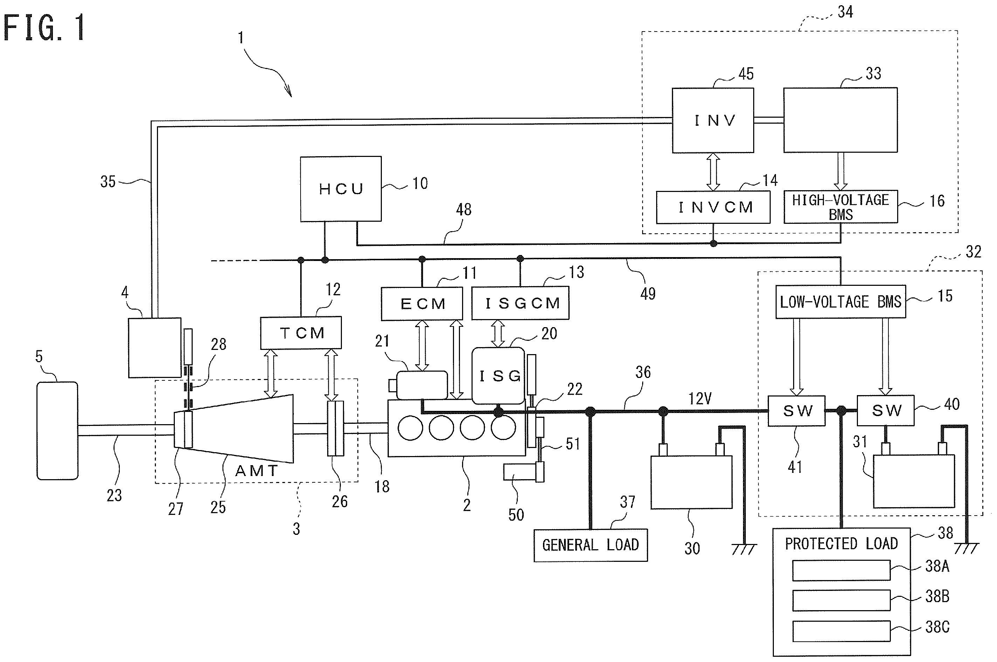

As illustrated in FIG. 1, a vehicle 1 includes an internal combustion engine 2 (hereinafter referred to simply as "engine") and a motor generator 4 as drive power sources each to generate a driving force (torque) for a vehicle travel, a transmission 3, drive wheels 5, a hybrid control unit (HCU) 10 as a control unit to comprehensively control the vehicle 1, an engine control module (ECM) 11 to control the engine 2, a transmission control module (TCM) 12 to control the transmission 3, an integrated starter generator control module (ISGCM) 13, an inverter control module (INVCM) 14, a low-voltage battery management system (BMS) 15, and a high-voltage BMS 16.

The engine 2 is formed with a plurality of cylinders. In this embodiment, the engine 2 is configured to perform, for each cylinder, a series of four strokes of an intake stroke, a compression stroke, an expansion stroke, and an exhaust stroke.

An integrated starter generator (ISG) 20 and a starter 21 are coupled to the engine 2. The ISG 20 is coupled to a crankshaft 18 of the engine 2 via a belt 22 and the like. The ISG 20 has a motor function of rotating with a supplied electric power to thereby rotationally drive the engine 2, and a generator function of converting a rotation torque inputted from the crankshaft 18 into an electric power.

In this embodiment, the ISG 20 is configured to be controlled by the ISGCM 13 to function as a starter motor to restart the stopped engine 2 by an idle stop function. The ISG 20 can also function as an assist motor to assist a travel of the vehicle 1.

The starter 21 includes a motor and a pinion gear (not illustrated). By rotating the motor, the starter 21 rotates the crankshaft 18 to thereby provide a rotation torque to the engine 2 at starting the engine 2.

Thus, the engine 2 is configured to be started by the starter 21 and to be, in the stopped state by the idle stop function, restarted by the ISG 20.

The transmission 3 is configured to change a speed of a rotation outputted from the engine 2, to thereby drive the drive wheels 5 through drive shafts 23. The transmission 3 includes a constant mesh transmission mechanism 25 which is of a parallel shaft gear mechanism, a clutch 26, which is of a normally-closed dry clutch, a differential mechanism 27, and an actuator (not illustrated).

The transmission 3 is of an automated manual transmission (AMT) as an automatic transmission, in which a structure of a manual transmission is basically adopted so as to automate a gear shift operation therein and in which the actuator is to be controlled by the TCM 12 to switch shift stages in the transmission mechanism 25 therebetween and engage/ disengage the clutch 26. The differential mechanism 27 is configured to transmit the power, outputted from the transmission mechanism 25, to the drive shafts 23.

The motor generator 4 is coupled to the differential mechanism 27 via a power transmission mechanism 28 such as a chain. That is, no separation mechanism such as the clutch 26 is provided between the motor generator 4 and the drive wheels 5, and the motor generator 4 is directly coupled to the drive wheels 5 via the power transmission mechanism 28. The motor generator 4 can function as an electric motor.

Thus, the vehicle 1 includes a parallel hybrid system where a power of both the engine 2 and the motor generator 4 can be used for driving the vehicle, i.e., is a hybrid vehicle which is allowed to travel with the power outputted from at least one of the engine 2 and the motor generator 4.

The motor generator 4 can also function as a generator, which is configured to generate an electric power using the vehicle travel.

Note that the motor generator 4 may be coupled anywhere on a power transmission path between the engine 2 and the drive wheels 5 so as to be able to transmit the power, but may not be coupled to the differential mechanism 27.

The vehicle 1 includes a first battery 30, a low-voltage power pack 32 including a second battery 31, a high-voltage power pack 34 including a third battery 33, a high-voltage cable 35, and a low-voltage cable 36.

The first battery 30, the second battery 31, and the third battery 33 are each secondary batteries to be recharged. The first battery 30 is of a lead battery. The second battery 31 has higher output and higher energy density than the first battery 30.

The second battery 31 can be fully-charged in a shorter time than the first battery 30. In this embodiment, the second battery 31 is of a lithium ion battery. Alternatively, the second battery 31 may be a nickel-metal hydride battery.

The first battery 30 and the second battery 31 are each low-voltage batteries, in each of which the number of cells and the like are set to generate an output voltage of approximately 12 V. The third battery 33 is of a lithium ion battery, for example.

The third battery 33 is a high-voltage battery, in which the number of cells and the like are set so as to generate a higher voltage than the first battery 30 and the second battery 31, and is configured to generate an output voltage of 100 V, for example. Status of the third battery 33, such as a remaining capacity, is to be managed by the high-voltage BMS 16. The third battery 33 is configured to supply the electric power to the motor generator 4 during a power running. The third battery 33 is configured to be charged with an electric power regenerated by the motor generator 4 during a vehicle deceleration.

The vehicle 1 includes a general load 37 and a protected load 38 as electric loads. The general load 37 and the protected load 38 are each electric loads, not including the starter 21 and the ISG 20.

The protected load 38 is an electric load which always requires a stable power supply. The protected load 38 includes a stability control device 38A to prevent a skidding of the vehicle 1, an electric power steering control device 38B to electrically assist an operation force of a steering wheel, and headlights 38C. The protected load 38 also includes lamps and meters on an instrument panel and a car navigation system (not illustrated).

The general load 37 is an electric load which does not require a stable power supply compared to the protected load 38, which is to be used temporarily. The general load 37 includes, for example, windshield wipers, and an electric cooling fan to blow a cooling air to the engine 2 (both not shown).

The low-voltage power pack 32 includes, in addition to the second battery 31, switches 40 and 41 and the low-voltage BMS 15. The first battery 30 and the second battery 31 are connected to, through the low-voltage cable 36, the starter 21, the ISG 20, and the general load 37 and the protected load 38 as electric loads, so as to be able to supply the electric power thereto. The first battery 30 and the second battery 31 are electrically connected in parallel to the protected load 38.

The switch 40 is provided, on the low-voltage cable 36, between the second battery 31 and the protected load 38.

The switch 41 is provided, on the low-voltage cable 36, between the first battery 30 and the protected load 38.

The low-voltage BMS 15 is configured to control an opening/closing of each of the switches 40 and 41 to thereby control a charging/discharging of the second battery 31 and an electric power supply to the protected load 38. While the engine 2 is stopped due to the idle stop, the low-voltage BMS 15 closes the switch 40 and opens the switch 41 to thereby supply the electric power from the second battery 31 with the high output and energy density to the protected load 38.

When starting the engine 2 by the starter 21 or when restarting, by the ISG 20, the stopped engine 2 by the idle stop control, the low-voltage BMS 15 closes the switch 40 and opens the switch 41 to thereby supply the electric power from the first battery 30 to the starter 21 or the ISG 20. While the switch 40 is closed and the switch 41 is opened, the first battery 30 supplies the electric power to also the general load 37.

Thus, the first battery 30 is configured to supply the electric power to at least the starter 21 and the ISG 20 to start/restart the engine 2.

The second battery 31 is configured to supply the electric power to at least the general load 37 and the protected load 38.

The second battery 31 is connected to both the general load 37 and the protected load 38 so as to be able to supply the electric power thereto, but the switches 40 and 41 are to be controlled by the low-voltage BMS 15 so as to supply the electric power preferentially to the protected load 38 which always requires a stable power supply.

Based on a state of charge (remaining charging amount) of each of the first battery 30 and the second battery 31, and operation requests to the general load 37 and the protected load 38, the low-voltage BMS 15 may control the switches 40 and 41 differently from the above-mentioned example, in order to prioritize a stable operation of the protected load 38.

The high-voltage power pack 34 includes, in addition to the third battery 33, an inverter 45, the INVCM 14, and the high-voltage BMS 16. The high-voltage power pack 34 is connected to, through the high-voltage cable 35, the motor generator 4 so as to be able to supply the electric power to the motor generator 4.

The inverter 45 is to be controlled by the INVCM 14 to mutually convert an alternating current power for the high-voltage cable 35 and a direct current power for the third battery 33. For example, when powering the motor generator 4, the INVCM 14 converts, using the inverter 45, the direct current power discharged from the third battery 33 into the alternating current power to thereby supply the converted alternating current power to the motor generator 4.

During the regeneration by the motor generator 4, the INVCM 14 causes the inverter 45 to convert the alternating current power generated by the motor generator 4 into the direct current power to thereby charge the third battery 33 with the converted direct current power.

Each of the HCU 10, the ECM 11, the TCM 12, the ISGCM 13, the INVCM 14, the low-voltage BMS 15, and the high-voltage BMS 16 is constituted of a computer unit including a central processing unit (CPU), a random access memory (RAM), a read only memory (ROM), a flash memory to store a backup data and the like, an input port, and an output port.

The ROMs of these computer units store programs for causing the respective computer units to function as the HCU 10, the ECM 11, the TCM 12, the ISGCM 13, the INVCM 14, the low-voltage BMS 15, and the high-voltage BMS 16, in addition to various constants, various maps, and the like.

That is, the CPUs execute the programs stored in the ROMs using the RAMs as work areas, thereby causing these computer units to function as the HCU 10, the ECM 11, the TCM 12, the ISGCM 13, the INVCM 14, the low-voltage BMS 15, and the high-voltage BMS 16, respectively, in this embodiment.

The vehicle 1 also includes controller area network (CAN) communication lines 48 and 49 for constructing an in-vehicle local area network (LAN) which complies with standards such as CAN.

The HCU 10 is mutually communicatably connected to the INVCM 14 and the high-voltage BMS 16, through the CAN communication line 48. That is, the HCU 10, the INVCM 14, and the high-voltage BMS 16 are each configured to mutually transmit and receive a signal, such as a control signal, through the CAN communication line 48.

The HCU 10 is mutually communicatably connected to the ECM 11, the TCM 12, the ISGCM 13 and the low-voltage BMS 15, through the CAN communication line 49. The HCU 10, the ECM 11, the TCM 12, the ISGCM 13, and the low-voltage BMS 15 are each configured to mutually transmit and receive a signal, such as a control signals, through the CAN communication line 49.

Thus, in the vehicle 1, the power of the engine 2 is transmitted to the drive wheels 5, through the transmission 3. The motor generator 4 is a rotating electric machine configured to transmit a power torque to the drive wheels 5/transmit with a generation torque from the drive wheels 5.

A compressor 50 of an air conditioner (not illustrated) for air conditioning is connected to the crankshaft 18 of the engine 2 through a belt 51. Thus, the compressor 50 is to operate with the power of the engine 2.

The HCU 10 is configured to switch the driving state of the vehicle 1, i.e., switch between the driving modes. As the driving state of the vehicle 1, there are the EV mode and the HEV mode.

The EV mode is a driving state in which the vehicle 1 is allowed to travel with the power of the motor generator 4 with the engine 2 being stopped. During the EV mode, the HCU 10 controls the motor generator 4 so that driver-demanded torque is satisfied with the power of the motor generator 4.

The HEV mode is a driving state in which, with the engine 2 being operated, the vehicle 1 is allowed to travel with power of the engine 2 (hereinafter also referred to as "engine torque") and power of the motor generator 4 (hereinafter also referred to as "motor torque"). During the HEV mode, the HCU 10 controls the engine 2 and the motor generator 4 so that the driver-demanded torque is satisfied with the total torque obtained by summing the power of the engine 2 and the power of the motor generator 4 (i.e., total of the engine torque and the motor torque).

During the HEV mode, when a predetermined EV mode transition condition is to be established, the HCU 10 switches the HEV mode to the EV mode. The EV mode transition condition is to be established when all of multiple requirements are satisfied.

These requirements include:
a requirement that a state of charge (SOC) of a battery namely the third battery 33 to supply the electric power to the motor generator 4 is a threshold value or higher; and
another requirement that the driver-demanded torque can be satisfied with the power (motor torque) to be generated by the motor generator 4.

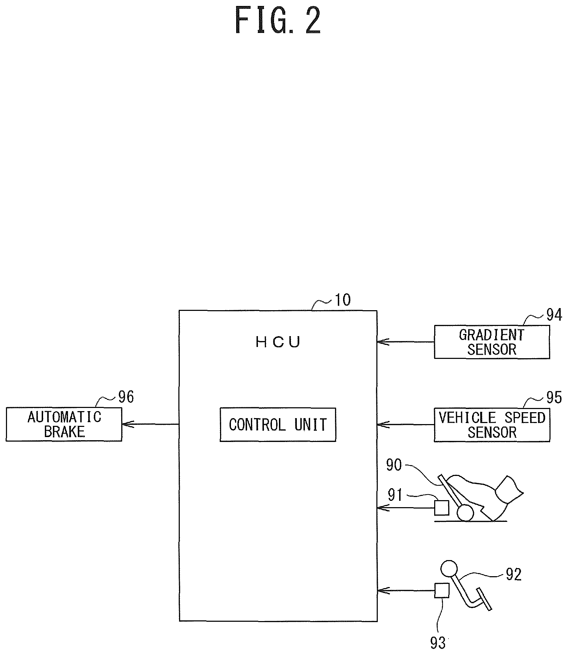

As illustrated in FIG. 2, the vehicle 1 also includes an accelerator pedal 90 and a brake pedal 92 both to be operated by the driver. A depression amount of the accelerator pedal 90 is to be detected by an accelerator pedal sensor 91. A depression amount of the brake pedal 92 is to be detected by a brake pedal sensor 93. The accelerator pedal sensor 91 and the brake pedal sensor 93 are both connected to the HCU 10, and each configured to transmit the corresponding detected signal to the HCU 10.

When detecting an operation to the accelerator pedal 90 (hereinafter referred to also as "accelerator operation"), the HCU 10 calculates a driver-demanded torque in accordance with an amount of the detected accelerator operation, namely the depression amount of the accelerator pedal 90.

The vehicle 1 also includes a vehicle speed sensor 95 to detect the vehicle speed, and a gradient sensor 94 to detect a road surface gradient. The gradient sensor 94 is configured to detect the road surface gradient by measuring a posture (inclination angle) of the vehicle 1. The vehicle speed sensor 95 and the gradient sensor 94 are both connected to the HCU 10, to transmit the respective detected signals to the HCU 10.

The vehicle 1 also includes an automatic brake 96. The automatic brake 96 is a braking device to apply, on predetermined conditions, a braking force to the wheels under the control of the HCU 10. The automatic brake 96 includes a brake hold (BH) and an electric parking brake (EPB).

The BH is to, during a vehicle stop due to a brake operation of the driver with a travel range (D range, R range, or the like) being selected, hold a braking force so that the vehicle 1 remains stopped even when the driver takes the own foot off the brake pedal 92.

The EPB is to, with a parking range (P range) being selected, hold the braking force so as to keep the vehicle stopped. Specifically, the EPB keeps the vehicle stopped, by operating the parking brake using an electric motor (not illustrated).

During the vehicle stop, the HCU 10 executes a braking force holding control of holding the braking force so as to keep the vehicle stopped even without the driver's brake operation (i.e., operates the EPBBH).

Specifically, in the braking force holding control, the HCU 10 operates the automatic brake 96 (EPB/BH) in accordance with the selected shift position (e.g., P range, N range, D range, R range) to thereby hold the braking force. The HCU 10 releases the braking force holding control to thereby start the vehicle 1, upon detecting the driver's accelerator operation during the braking force holding control.

By the way, in the vehicle 1 where such a braking force holding control is performed, upon the release of the braking force holding control in response to the accelerator operation, a load is to act on a power train including the engine 2, the motor generator 4, the clutch 26, and the transmission 3, thereby causing a possibility that wear and tear may be generated at the power train.

That is, as mentioned above, in the process of releasing the braking force holding control in response to the accelerator operation, the driving force increases in response to the accelerator operation, but the vehicle 1 remains stopped until the increased driving force exceeds the remaining braking force. In other words, both the driving force and the braking force simultaneously act on the vehicle 1 in the process of releasing the braking force holding control, which may cause wear and tear on the power train of the vehicle 1.

To be specific, in the vehicle 1 mounted with the transmission 3 of the AMT, in the process of releasing the braking force holding control, the both the driving force and the braking force are likely to simultaneously act on the vehicle 1 with the clutch 26 being in a half-clutch state, which may cause the clutch 26 to overheat and wear.

Furthermore, in the vehicle 1 in which the motor generator 4 is directly connected to the drive wheels 5, while the wheels are stopped by the braking force, the motor generator 4 is difficult to rotate the wheels even if the motor generator 4 generates the motor torque and thus, a large current may flow through high-voltage components, such as the inverter 45 to drive the motor generator 4, thereby causing a damage to the high-voltage components.

In particular, when starting the vehicle 1 on an inclined road, in order to prevent the vehicle 1 from sliding down due to a road surface gradient, the driver tends to depress the accelerator pedal 90 more deeply than when starting the vehicle 1 on a flat road. Due thereto, the driving force when the braking force holding control is released is likely to be greater at the starting on the inclined road than at the starting on the flat road.

For this reason, the wear and tear on the power train due to the release of the braking force holding control may be greater when starting the vehicle forward on an uphill road surface or when starting the vehicle backward on a downhill road surface than when starting the vehicle forward/backward on a flat road.

Thus, in this embodiment, the HCU 10 is configured to execute a driving force limitation control of limiting the driving force to be generated from the drive power source based on the road surface gradient and the shift information.

For example, in the driving force limitation control, when the vehicle 1 starts forward on an uphill road surface/backward on a downhill road surface, the HCU 10 increases the limitation amount for the driving force (driver-demanded torque value) as an absolute value of the road surface gradient becomes larger.

Meanwhile, in a case where the vehicle speed exceeds an extremely low vehicle speed range after the vehicle 1 starts, the wear and tear on the power train is less-likely to occur since the clutch 26 is expected to be in not the half-clutch state but an engagement state and/or the motor generator 4 is expected, due to the vehicle start, not to be difficult to rotate. Rather, in such a case, if the driving force limitation control is continued for a long time, the driver may feel uncomfortable.

For this reason, the HCU 10 is configured to execute the driving force limitation control on a condition that the vehicle speed is below a predetermined vehicle speed threshold (which is set to be larger than zero). This vehicle speed threshold is larger than zero but relatively-small, being 10 km/h, for example.

Additionally, at the vehicle start, the driver tends to depress the accelerator pedal 90 not so much and hence, it is preferable to execute the driving force limitation control in a range in which an accelerator opening to be determined in accordance with the depression amount of the accelerator pedal 90 is relatively-small.

Furthermore, when the driver intends to suddenly starts the vehicle 1 to thereby depress the accelerator pedal 90 relatively large, if the driving force limitation control is executed to thereby render the driver-demanded torque non-satisfied, the drivability may be deteriorated.

Accordingly, the HCU 10 is configured to execute the driving force limitation control on another condition that the accelerator opening (i.e., amount of the driver's operation to the accelerator pedal 90) is below a predetermined accelerator opening threshold (which is set to be larger than zero).

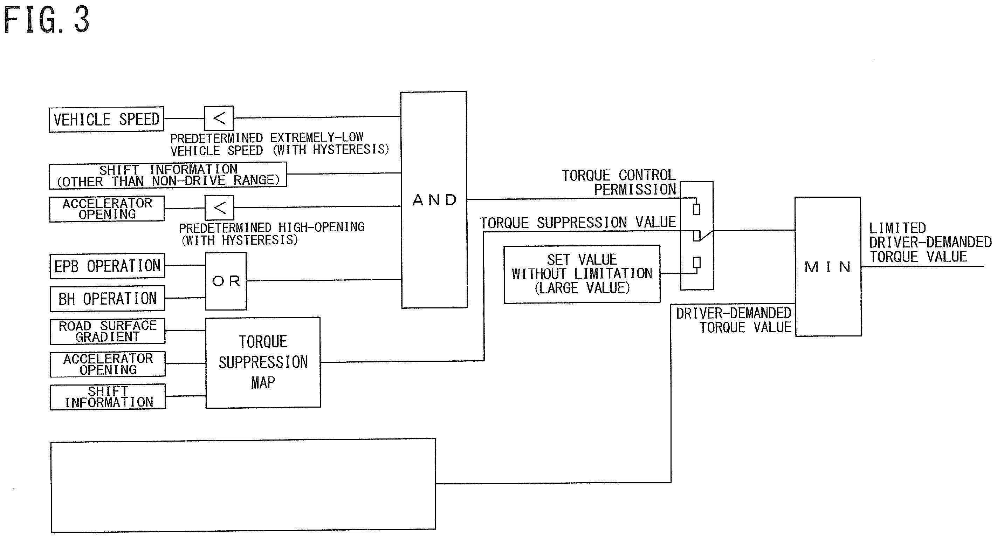

With reference to FIG. 3, a calculation process for a limited driver-demanded torque value to be performed by the HCU 10 will be described.

As illustrated in FIG. 3, the HCU 10 calculates the limited driver-demanded torque value, referring to the vehicle speed, the shift information, the accelerator opening, the EPB operation state, the BH operation state, and the road surface gradient.

The driver-demanded torque value is defined as a value of a torque which acts on the drive shafts 23, for example.

The HCU 10 is configured to output a torque suppression permission signal under the following condition that:
the vehicle speed is below the predetermined vehicle speed threshold;
the shift position based on the shift information is other than the non-drive range (e.g., P range, N range);
the accelerator opening is below the predetermined accelerator opening threshold; and
at least one of the EPB and the BH is in operation.

Note that such a predetermined accelerator opening threshold is relatively-high (e.g., 70%, as a full accelerator pedal depression being 100%), which corresponds to a relatively-large accelerator pedal depression amount.

The HCU 10 is configured to refer to a torque suppression map based on the road surface gradient, the accelerator opening, and the shift information, in order to calculate a torque suppression value to which the engine torque and/or the motor torque is limited. Note that as the torque suppression map, there are a torque suppression map for forward shifting and another torque suppression map for reverse shifting. These torque suppression maps are stored in the HCU 10. The HCU 10 stores, in addition to these torque suppression maps, a normal torque map to be referred to when no torque limitation is performed (i.e., at a normal torque control).

Note that if sign of the road surface gradient is defined as positive (uphill gradient)/negative (downhill gradient), in the torque suppression map for forward shifting, a torque limit area (a torque limitation amount by which the driver-demanded torque value is reduced) becomes larger to thereby make the torque suppression value smaller, as at the positive road surface gradient the absolute value becomes larger (i.e., as the uphill gradient becomes greater). On the other hand, in the torque suppression map for backward shifting, the torque limit area becomes larger to thereby make the torque suppression value smaller, as at the negative road surface gradient the absolute value becomes larger (i.e., as the downhill gradient becomes greater).

The HCU 10 is configured to calculate the driver-demanded torque value, based on the vehicle speed, the accelerator opening, and one of the gear stages which is established.

While the torque suppression permission signal is outputted, the HCU 10 executes the driving force limitation control, i.e., outputs, as the limited driver-demanded torque value, a smaller one of the torque suppression value and the driver-demanded torque value.

That is, in the driving force limitation control, if the driver-demanded torque value is greater than the torque suppression value, the torque suppression value is to be outputted as the limited driver-demanded torque value, i.e., the engine torque/motor torque is to be outputted so as to satisfy the limited driver-demanded torque value.

In other words, while the torque suppression permission signal is outputted, even if, for example, the driver depresses the accelerator pedal 90 so that the driver-demanded torque value exceeds the torque suppression value, the driver-demanded torque value is limited to the torque suppression value.

As such, the driving force is limited.

On the other hand, while the torque suppression permission signal is not outputted, the HCU 10 outputs a smaller one of an unlimited value (which is set as a large value) and the driver-demanded torque value as the limited driver-demanded torque value. The driver-demanded torque value is always smaller than the unlimited value.

Thus, in such a case, the driver-demanded torque value is to be outputted as the limited driver-demanded torque value, not limiting the driving force.

Alternatively, while the torque suppression permission signal is not outputted, the HCU 10 may simply output the driver-demanded torque value, without comparing it with the unlimited value.

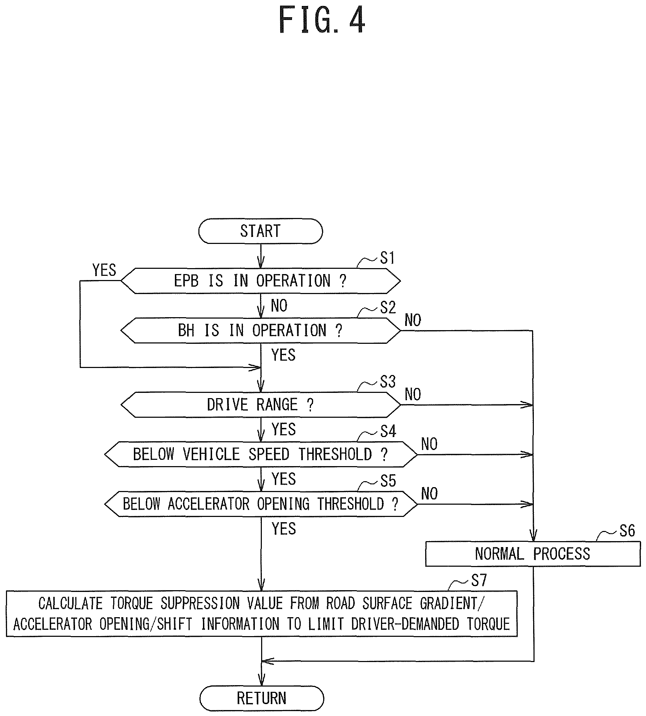

With reference to FIG. 4, the procedures of the torque suppression process to be performed in the HCU 10 will be described.

As illustrated in FIG. 4, the HCU 10 determines whether the EPB is in operation (step S 1).

If determines that the EPB is not in operation (NO in step S 1), the HCU 10 determines whether the BH is in operation (step S2).

If determines that the EPB is in operation (YES in step S 1) or the BH is in operation (YES in step S2), the HCU 10 determines whether the shift position is in the drive range (step S3).

If determines that the shift position is in the drive range (YES in step S3), the HCU 10 determines whether the vehicle speed (including zero) is below the vehicle speed threshold (step S4).

If determines that the vehicle speed is below the vehicle speed threshold (YES in step S4), the HCU 10 determines whether the accelerator opening (including zero) is below the accelerator opening threshold (step S5).

If determines that the accelerator opening is below the accelerator opening threshold (YES in step S5), in order to execute the driving force limitation control, the HCU 10 calculates the torque suppression value from the road surface gradient, the accelerator opening, and the shift information, and limits the driver-demanded torque to the calculated torque suppression value (step S7). Thereafter, the HCU 10 returns to step S3, to thereby repeat such a process.

For example, when the EPB is in operation, immediately after the shift position is switched from P range into the drive range prior to the accelerator operation, the driving force limitation control is to be started due to the vehicle speed of zero and the accelerator opening of zero (YES at steps S3 to S5), and is maintained until the vehicle speed/accelerator opening reaches or exceeds the predetermined vehicle speed threshold/accelerator opening threshold. Then, upon the accelerator operation (driver's depression to the accelerator pedal 90), the in-operation EPB is released while the driver-demanded torque corresponding to the accelerator operation amount is limited by the driving force limitation control.

Meanwhile, for example, during such an EPB, upon a drastic accelerator operation (accelerator opening ≥ accelerator opening threshold) after the shift position is switched from P range into the drive range (YES in step S4, but NO in step S5), the HCU 10 proceeds to step S6, to release the driving force limitation control to alternatively execute a normal process to be mentioned later.

On the other hand, if:
the EPB is not in operation (NO in step S 1) and also the BH is not in operation (NO in step S2);
the shift position is not in the drive range (NO in step S3);
the vehicle speed is not below the vehicle speed threshold (NO in step S4); or
the accelerator opening is not below the accelerator opening threshold (NO in step S5),
the HCU 10 executes a normal process (step S6) and terminates this torque suppression process to repeat it at a predetermined interval. In such a normal process, the HCU 10 calculates the driver-demanded torque with reference to the normal torque map.

Note that as to the flowchart as shown in FIG. 4, as mentioned above, the HCU 10 returns to step S3 when proceeding to "RETURN" through step S7, but returns to "START" at the interval when proceeding to "RETURN" through step S6.

As described above, in this embodiment, at the release of the braking force holding control in response to the driver's accelerator operation, the HCU 10 executes the driving force limitation control of limiting the driving force, to be generated from the drive power source, based on the road surface gradient and the like.

Due thereto, since the driving force is limited in consideration of the road surface gradient and the like when the braking force holding control is released in response to the accelerator operation, it is possible to prevent the driving force from being applied with the braking force being remained, thereby preventing, from being overheated and damaged, the clutch 26 between the drive power source and the drive wheels and/or preventing the high-voltage components in the drive power source from being damaged.

As a result, wear and tear on the power train due to the release of the braking force holding control can be suppressed.

In this embodiment, during the braking force holding control, when the driver is expected to depress the accelerator pedal 90, i.e., upon the shift position being in the drive range, the HCU 10 is to start the driving force limitation control. Thereafter, if the vehicle speed increases to thereby reach or exceed the vehicle speed threshold, the HCU 10 releases the driving force limitation control to alternatively execute a normal torque control.

Thus, when the shift position is in the drive range during the braking force holding control, the HCU 10 executes (starts or maintains) the driving force limitation control on a condition that the vehicle speed is below the vehicle speed threshold.

Thus, since the driving force limitation control can be started prior to an actual accelerator operation, it is possible to more surely suppress the wear and tear on the power train. Additionally, while the vehicle speed after the vehicle 1 starts is below the vehicle speed threshold, i.e., when the clutch 26 is expected to be in the half-clutch state (where the clutch 26 may be overheated and damaged) or when the braking force is expected to be still remained, the driving force limitation is maintained. But such a limitation is to be released immediately after the vehicle speed reaches the vehicle speed threshold.

Accordingly, it is possible to avoid the driver from feeling uncomfortable due to the driving force limitation, while preventing the clutch 26 from being overheated and damaged and the high-voltage components from being damaged.

In this embodiment, the HCU 10 executes (starts or maintains) the driving force limitation control on another condition that the accelerator opening corresponding to the accelerator operation amount is below the predetermined accelerator opening threshold. In other words, during the braking force holding control, with the drive range being selected and without the accelerator operation (i.e., the accelerator opening = 0), the driving force limitation control is to be started on the above-mentioned vehicle speed condition. But thereafter, if the accelerator pedal 90 is operated so that the accelerator opening reaches or exceeds the predetermined accelerator opening threshold, the driving force limitation control is to be released.

Thus, when, for example, the driver intends to suddenly start the vehicle 1 to thereby drastically depress the accelerator pedal 90 (accelerator opening ≥ accelerator opening threshold), the driving force limitation control is to be released, thereby avoiding the drivability from being deteriorated due to the driving force limitation contrary to the driver's intention.

While the embodiments of the present invention have been disclosed, it will be apparent to those having skill in the art that modifications may be made without departing from the scope of the present invention. All such modifications and equivalents are intended to be included in the following claims.

### Reference Signs List

1: Vehicle
2: Engine (drive power source)
4: Motor generator (drive power source)
10: HCU (control unit)

## Claims

1. A vehicle start control device to be mounted on a vehicle (1) with a drive power source (2, 4) to generate a driving force to drive the vehicle, the vehicle start control device comprising
a control unit (10) to:
execute a braking force holding control of holding a braking force so as to keep the vehicle stopped even without a driver's brake operation; and
release the braking force holding control to thereby start the vehicle, upon a driver's accelerator operation during the braking force holding control, wherein
the control unit is configured to execute a driving force limitation control of limiting, based on a road surface gradient, the driving force to be generated from the drive power source, at the release of the braking force holding control.

2. The vehicle start control device as claimed in claim 1, wherein
the control unit executes the driving force limitation control, on a condition that a vehicle speed is below a predetermined vehicle speed threshold.

3. The vehicle start control device as claimed in claim 2, wherein
the control unit releases the driving force limitation control, if an accelerator opening, which corresponds to the driver's accelerator operation, reaches or exceeds a predetermined accelerator opening threshold.
